(19) Europäisches Patentamt
European Patent Office
Office européen des brevets

(11) EP 4 715 993 A1

# (12) EUROPEAN PATENT APPLICATION

(43) Date of publication:
**25.03.2026 Bulletin 2026/13**

(21) Application number: **25201862.7**

(22) Date of filing: **12.09.2025**

(51) International Patent Classification (IPC):
***H01M 50/411*** *(2021.01)* ***H01M 50/449*** *(2021.01)*
***H01M 10/052*** *(2010.01)*

(52) Cooperative Patent Classification (CPC):
**H01M 50/411; H01M 10/052; H01M 50/449**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.09.2024 KR 20240125491**

(71) Applicant: **SAMSUNG SDI CO., LTD.**
**Yongin-si, Gyeonggi-do 17084 (KR)**

(72) Inventors:
- **Han, Byong Joon**
  **16678 Suwon-si, Gyeonggi-do (KR)**
- **Ko, Chang Hong**
  **16678 Suwon-si, Gyeonggi-do, (KR)**
- **Kim, Soo Hee**
  **16678 Suwon-si, Gyeonggi-do (KR)**
- **Lee, Eon Mi**
  **16678 Suwon-si, Gyeonggi-do (KR)**
- **Han, Yoo Bin**
  **16678 Suwon-si, Gyeonggi-do (KR)**
- **Choi, In Hye**
  **16678 Suwon-si, Gyeonggi-do (KR)**
- **Lee, Hak Min**
  **16678 Suwon-si, Gyeonggi-do (KR)**

(74) Representative: **Gulde & Partner**
**Patent- und Rechtsanwaltskanzlei mbB**
**Berliner Freiheit 2**
**10785 Berlin (DE)**

## (54) SEPARATOR FOR RECHARGEABLE LITHIUM BATTERY AND RECHARGEABLE LITHIUM BATTERY INCLUDING THE SAME

(57) The present disclosure relates to a separator for a rechargeable lithium battery, and a rechargeable lithium battery including the separator. The separator includes a porous substrate, a coating layer located on at least one surface of the porous substrate, and an adhesive layer located on one surface of the coating layer. The coating layer includes a crosslinked product of a binder, a cross-linking agent, and a carboxyalkyl cellulose or a salt thereof, and a filler. The binder includes a (meth)acryl-based binder that includes a first structural unit derived from (meth)acryl amide and a second structural unit derived from (meth)acrylamidosulfonic acid or a salt thereof. The crosslinking agent includes an aziridine-based crosslinking agent, and the adhesive layer includes a (meth)acryl-based adhesive binder.

EP 4 715 993 A1

## Description

### Field of the Disclosure

The present disclosure relates to a separator for a rechargeable lithium battery and a rechargeable lithium battery including the separator.

### Discussion of Related Art

With increasing presence of electronic devices that use batteries such as, e.g., mobile phones, laptop computers, electric vehicles, and the like, the demand for rechargeable batteries with high energy density and high capacity is increasing. Accordingly, improving the performance of rechargeable lithium batteries may be advantageous.

A rechargeable lithium battery typically includes a positive electrode and a negative electrode, the positive electrode and the negative electrode include active materials that enable intercalation and deintercalation of lithium ions, and an electrolyte, and the rechargeable lithium battery produces electrical energy through oxidation and reduction when lithium ions are intercalated/deintercalated into/from the positive and negative electrodes.

A rechargeable lithium battery may include a separator between a positive electrode and a negative electrode. The separator may be impregnated in the electrolyte. It may be desirable for the separator to retain the original shape thereof without thermal shrinkage in the electrolyte to improve the safety of the battery.

### SUMMARY

The invention is defined by the appended claims. The description that follows is subjected to this limitation. Any disclosure lying outside the scope of said claims is only intended for illustrative as well as comparative purposes.

The present disclosure describes a separator for a rechargeable lithium battery, which results in a battery with desired or improved safety in exposure to heat.

The present disclosure describes a rechargeable lithium battery which includes the separator.

One aspect of the present disclosure includes a separator for a rechargeable lithium battery.

The separator for a rechargeable lithium battery includes a porous substrate, a coating layer located on at least one surface of the porous substrate, and an adhesive layer located on one surface of the coating layer. The coating layer includes a crosslinked product of a binder, a cross-linking agent, and a carboxyalkyl cellulose or a salt thereof, and a filler. The binder includes a (meth)acryl-based binder that includes a first structural unit derived from (meth)acryl amide and a second structural unit derived from (meth)acrylamidosulfonic acid or a salt thereof. The crosslinking agent includes an aziridine-based crosslinking agent, and the adhesive layer includes a (meth)acryl based adhesive binder.

Another aspect of the present disclosure includes a rechargeable lithium battery.

The rechargeable lithium battery includes a positive electrode, a negative electrode, and the separator for a rechargeable lithium battery, the separator being located between the positive electrode and the negative electrode.

The separator for a rechargeable lithium battery according to one aspect may implement a battery with desired or improved safety in exposure to heat, thereby increasing the reliability of the battery.

### BRIEF DESCRIPTION OF THE DRAWINGS

The above and other objects, features and advantages of the present disclosure may become more apparent to those of ordinary skill in the art by describing example embodiments thereof in detail with reference to the accompanying drawings, in which:

FIG. 1 is a cross-sectional view of a separator for a rechargeable lithium battery, according to one example embodiment;
FIG. 2 is a conceptual diagram of a stacked electrode assembly, according to one example embodiment;
FIGS. 3 to 6 are cross-sectional views that schematically illustrate rechargeable lithium batteries, according to one example embodiment;
FIG. 7 is a conceptual diagram of jelly roll in measuring a dry bending strength;
FIG. 8 is a conceptual diagram of a three-point bending test in measuring a dry bending strength; and
FIG. 9 is a conceptual diagram of a hot-tip test.

### DETAILED DESCRIPTION

Hereinafter, example embodiments of the present disclosure are described in detail. However, the embodiments

are presented as examples, and the present disclosure is not limited thereto, and the present disclosure is only defined by the scope of the appended claims.

Unless otherwise stated herein, when a part such as a layer, a membrane, an area, a plate, and the like, is described as being disposed "on" another part, it includes not only a case where the part is "directly on" another part, but also a case where there is one or more other parts therebetween.

Unless otherwise stated herein, the singular may also include the plural. In addition, unless otherwise stated, the term "A or B" may mean "including A, including B, or including A and B."

In the present disclosure, "a combination thereof" may mean a mixture, stack, composite, copolymer, alloy, blend, or reaction product of constituents.

Unless otherwise defined herein, 'a particle size D100' refers to a size of a particle with a cumulative volume of 100% by volume in a particle size distribution. The particle size distribution is measured using a laser diffraction method. When measuring the particle size distribution by the laser diffraction method, for example, the particle size D100 based on 100% of a particle size distribution in the measuring device may be calculated by dispersing particles to be measured in a dispersion medium, then introducing the dispersion medium into a commercially available laser diffraction particle size measuring device (e.g., Microtrac's MT 3000), and radiating ultrasonic waves of 28 kHz with an output of 60 W.

Unless otherwise defined herein, 'a particle size D50' refers to a size of a particle with a cumulative volume of 50% by volume in a particle size distribution. The particle size distribution is obtained from the method descripted with respect to the particle diameter D100.

In the present disclosure, "(meth)acryl" refers to acryl and/or methacryl.

Hereinafter, unless otherwise defined, "substitution" means that hydrogen in a compound is substituted with a substituent selected from the group consisting of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (Herein, R and R' are each independently hydrogen or a C1 to C6 alkyl group), a sulfobetaine group ($-RR'N^+(CH_2)_nSO_3^-$, n is a natural number from 1 to 10), a carboxybetaine group ($-RR'N^+(CH_2)_nCOO^-$, n is a natural number from 1 to 10) (Herein, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, Herein, R denotes hydrogen, a C1 to C6 alkyl group, a C1 to C6 alkoxy group , or a C6 to C12 aryl group), a carboxyl group (-COOH) or a salt thereof (-C(=O)OM, Herein, M denotes an organic or inorganic cation), a sulfonic acid group ($-SO_3H$) or a salt thereof ($-SO_3M$, Herein, M denotes an organic or inorganic cation), and a phosphate group ($-PO_3H_2$) or a salt thereof ($-PO_3MH$ or $-PO_3M_2$, Herein, M denotes an organic or inorganic cation).

Hereinafter, the C1 to C3 alkyl group may be or include a methyl group, an ethyl group, or a propyl group. The C1 to C10 alkylene group may be, for example, a C1 to C6 alkylene group, a C1 to C5 alkylene group, or a C1 to C3 alkylene group and may be, for example, a methylene group, an ethylene group, or a propylene group. The C3 to C20 cycloalkylene group may be, for example, a C3 to C10 cycloalkylene group, or a C5 to C10 alkylene group, for example, a cyclohexylene group. The C6 to C20 arylene group may be, for example, a C6 to C10 arylene group, for example, a phenylene group. The C3 to C20 heterocyclic group may be, for example, a C3 to C10 heterocyclic group, for example, a pyridine group.

Hereinafter, "hetero" means including one or more heteroatoms such as or including at least one of N, O, S, Si, and P.

In addition, in the chemical formulas, the symbol * refers to a part that is connected to the same or different atom, group, or structural unit. Unless otherwise stated in the chemical formulas described herein, it may be assumed that hydrogen is bonded in the structure of the chemical formula.

Hereinafter, "alkali metal" refers to an element belonging to Group 1 of the periodic table, such as lithium, sodium, potassium, rubidium, cesium, or francium and may be present in a cationic or neutral state.

In the present disclosure, when describing a numerical range, "X to Y" means "X or more and Y or less ($X\leq$ and $\leq Y$)."

A separator for a rechargeable lithium battery includes a porous substrate, a coating layer located on at least one surface of the porous substrate, and an adhesive layer located on one surface of the coating layer. The coating layer includes a crosslinked product of a binder, a cross-linking agent, and a carboxyalkyl cellulose or a salt thereof, and a filler. The binder includes a (meth)acryl-based binder that includes a first structural unit derived from (meth)acryl amide and a second structural unit derived from (meth)acrylamidosulfonic acid or a salt thereof. The crosslinking agent includes an aziridine-based crosslinking agent, and the adhesive layer includes a (meth)acryl-based adhesive binder.

According to one example embodiment, the coating layer may be formed from a composition for a coating layer, which includes the (meth)acryl-based binder, the aziridine-based crosslinking agent, the carboxyalkyl cellulose or a salt thereof, and the filler.

According to one example embodiment, the crosslinked product may be or include a thermally crosslinked product.

The separator may include the coating layer and the adhesive layer, which are located, e.g., sequentially located, on the porous substrate, thereby providing desired or improved safety to a battery exposed to heat. In this regard, the separator may provide desired or improved safety to a battery exposed to heat by providing low drying shrinkage, low shrinkage in an electrolyte, high binding strength between the porous substrate and the coating layer, and high dry bending strength for an electrode plate. The excellent safety of the above-mentioned battery under heat exposure can be confirmed by the shrinkage rate in the electrolyte and the HOT-TIP evaluation test.

According to one example embodiment, the drying shrinkage of the separator may be 5% or less in each of the machine direction (MD) and the transverse direction (TD), and the shrinkage in an electrolyte may be 15% or less, for example, 10% or less, or 5% or less in each of the MD and the TD. Herein, 'MD' and 'TD' are the same directions as the MD and TD of the porous substrate.

According to one example embodiment, the separator may have a binding strength of the coating layer to the porous substrate of 1.8N or more.

According to one example embodiment, the separator may have a dry bending strength for the electrode plate of 95N or more. The above dry bending strength may be advantageous for the stacked electrode assembly described below.

The separator that only has the coating layer on the porous substrate without the adhesive layer may have difficulty in providing desired or improved safety to a battery exposed to heat. A separator that has the adhesive binder in the coating layer without forming, or sequentially forming, the coating layer and the adhesive layer on the porous substrate may be difficult to provide desired or improved safety to a battery exposed to heat.

A separator having a coating layer formed from a composition for a coating layer, which includes the (meth)acryl-based binder, but does not include an aziridine-based crosslinking agent as a crosslinking agent, or contains a crosslinking agent other than the aziridine-based crosslinking agent, may have difficulty in providing desired or improved safety to a battery exposed to heat.

According to one example embodiment, the aziridine-based crosslinking agent may be included at 95 wt% or more, for example, 98 wt% to 100 wt%, or 100 wt% of the total crosslinking agent in the composition for a coating layer.

A separator having a coating layer formed from a composition for a coating layer, which includes the aziridine-based crosslinking agent and the filler, but does not include the (meth)acryl-based binder or contains a binder other than the (meth)acryl-based binder may not reach the range of the drying shrinkage and the shrinkage in an electrolyte. According to one example embodiment, the (meth)acryl-based binder may be included at 95 wt% or more, for example, 98 wt% to 100 wt% or 100 wt% of the total binder in the composition for a coating layer.

A separator having a coating layer formed from a composition for a coating layer not including the carboxyalkyl cellulose or a salt thereof may have difficulty in providing desired or improved safety to a battery exposed to heat.

## Coating layer

The coating layer is a heat-resistant layer, and the binder includes a (meth)acryl-based binder, which includes a first structural unit derived from (meth)acryl amide, and a second structural unit derived from (meth)acrylamidosulfonic acid or a salt thereof.

According to one example embodiment, a total of the first structural unit and the second structural unit may be included at 95 mol% or more, for example, 95 mol% to 100 mol%, or 100 mol% with respect to 100 mol% of the (meth)acryl-based binder.

The (meth)acryl-based binder may further include a third structural unit derived from (meth)acrylic acid or (meth) acrylate.

According to one example embodiment, a total of the first structural unit, the second structural unit, and the third structural unit may be included at 95 mol% or more, for example, 95 mol% to 100 mol%, or 100 mol% with respect to 100 mol% of the (meth)acryl-based binder.

The (meth)acryl-based binder is or includes a water-based heat-resistant binder, and may fix the filler onto the porous substrate and provide adhesiveness so that the coating layer adheres to the porous substrate and electrodes, and may contribute to improving the heat resistance, air permeability, and oxidation resistance of the separator.

The first structural unit derived from (meth)acryl amide has an amide functional group ($-(C=O)-NH_2$) in the structural unit. The ($-(C=O)-NH_2$) functional group may improve the adhesiveness between the porous substrate and the electrodes, and may more firmly fix inorganic particles within a coating layer by forming a hydrogen bond with the -OH functional group of the filler, thereby enhancing the heat resistance of the separator.

The second structural unit derived from (meth)acrylamidosulfonic acid or a salt thereof may enhance the heat resistance of the separator by reducing the mobility of the binder including a bulky functional group.

The third structural unit derived from (meth)acrylic acid or (meth)acrylate may fix the filler on the porous substrate and also provide adhesiveness so that the coating layer adheres to the porous substrate and electrodes, and may contribute to improving heat resistance and air permeability of the separator. In addition, the structural unit derived from (meth)acrylic acid or (meth)acrylate may include a carboxyl functional group (-C(=O)O-) in the structural unit, and thus

contribute to improving the dispersibility of the composition for a coating layer.

The first structural unit may be included at a range of 55 mol% to 95 mol%, for example, 70 mol% to 95 mol%, 75 mol% to 95 mol%, 80 mol% to 95 mol%, or 80 mol% to 90 mol% with respect to 100 mol% of the (meth)acryl-based binder.

A total of the second structural unit and the third structural unit may be included at a range of 5 mol% to 45 mol%, for example, 5 mol% to 30 mol%, 5 mol% to 25 mol%, 5 mol% to 20 mol%, or 10 to 20 mol% with respect to 100 wt% of the (meth)acryl-based binder.

The second structural unit may be included at a range of 0.1 mol% to 45 mol%, for example, 5 mol% to 45 mol%, 0.1 mol% to 30 mol%, 0.1 mol% to 20 mol%, 0.1 mol% to 10 mol%, or 1 mol% to 10 mol% with respect to 100 mol% of the (meth)acryl-based binder.

The third structural unit may be included at a range of 0 mol% to 30 mol%, 1 mol% to 30 mol%, for example, 1 mol% to 20 mol%, 1 mol% to 10 mol%, 5 mol% to 15 mol%, or 5 mol% to 20 mol% with respect to 100 mol% of the (meth) acryl-based binder.

When the content of each structural unit is within the above range, the heat resistance and adhesiveness of the separator may be further improved.

The first structural unit derived from (meth)acryl amide may be represented by Chemical Formula 1 below.

Chemical Formula 1:

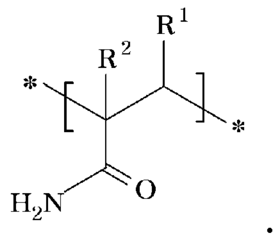

In Chemical Formula 1,

$R^1$ and $R^2$ each independently is or includes hydrogen or a methyl group.

The second structural unit derived from (meth)acrylamidosulfonic acid or a salt thereof may be or include a structural unit derived from (meth)acrylaminosulfonic acid or (meth)acrylamidosulfonate, where the (meth)acrylamidosulfonate may be or include a conjugate base of the (meth)acrylamidosulfonic acid, (meth)acrylamidosulfonate, or a derivative thereof. The structural unit derived from the (meth)acrylamidosulfonic acid or (meth)acrylamidosulfonate may be represented by, for example, any one of Chemical Formula 2 below, Chemical Formula 3 below, Chemical Formula 4 below, and a combination thereof.

Chemical Formula 2:

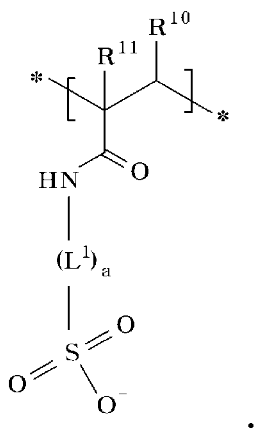

Chemical Formula 3:

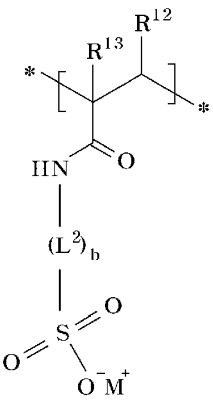

Chemical Formula 4:

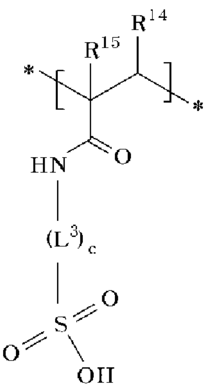

In Chemical Formula 2 to Chemical Formula 4,

$R^{1\circ}$, $R^{11}$, $R^{12}$, $R^{13}$, $R^{14}$, and $R^{15}$ each independently is or includes hydrogen or a methyl group,
$L^1$, $L^2$, and $L^3$ each independently is or includes a substituted or unsubstituted $C_1$ to $C_{10}$ alkylene group, a substituted or unsubstituted $C_3$ to $C_{20}$ cycloalkylene group, a substituted or unsubstituted $C_6$ to $C_{20}$ arylene group, or a substituted or unsubstituted $C_3$ to $C_{20}$ heterocyclic group,
a, b and c are each independently an integer in a range from 0 to 2, M is or includes an alkali metal, and the alkali metal may be or include, for example, at least one of lithium, sodium, potassium, rubidium, or cesium.

For example, in Chemical Formula 2 to Chemical Formula 4, $L^1$, $L^2$, and $L^3$ may each independently be or include a substituted or unsubstituted $C_1$ to $C_{10}$ alkylene group, and a, b and c may each be equal to 1.

The structural unit derived from the (meth)acrylamidosulfonic acid or a salt thereof may include the structural unit represented by Chemical Formula 2, the structural unit represented by Chemical Formula 3, or the structural unit represented by Chemical Formula 4, or two or more thereof. In one example, the structural unit represented by Chemical Formula 2 may be included, and in another example, both of the structural unit represented by Chemical Formula 2 and the structural unit represented by Chemical Formula 3 may be included.

When both of the structural unit represented by Chemical Formula 2 and the structural unit represented by Chemical Formula 3 are included, the structural unit represented by Chemical Formula 2 and the structural unit represented by Chemical Formula 3 may be included in a molar ratio in a range of 10:1 to 1:2, for example 5:1 to 1:1, and for example 3:1 to 1:1.

A sulfonate group in the structural unit derived from (meth)acrylamidosulfonic acid or a salt thereof may be or include, for example, a functional group derived from at least one of vinyl sulfonic acid, allyl sulfonic acid, styrene sulfonic acid, anethole sulfonic acid, acrylamidoalkane sulfonic acid, sulfoalkyl (meth)acrylate, or a salt thereof. Herein, the alkane may be or include at least one of $C_1$ to $C_{20}$ alkane, $C_1$ to $C_{10}$ alkane, or $C_1$ to $C_6$ alkane, and the alkyl may be $C_1$ to $C_{20}$ alkyl, $C_1$ to $C_{10}$ alkyl, or $C_1$ to $C_6$ alkyl. The salt is a salt composed of or including the above-described sulfonic acid and an

appropriate ion. The ion may be or include, for example, an alkali metal ion, and in this case, the salt may be or include a sulfonic acid alkali metal salt.

The acrylamidoalkane sulfonic acid may be or include, for example, 2-acrylamido-2-methylpropane sulfonic acid.

The third structural unit derived from (meth)acrylic acid or (meth)acrylate may be represented by any one of Chemical Formula 5 below, Chemical Formula 6 below, Chemical Formula 7 below, and a combination thereof.

Chemical Formula 5:

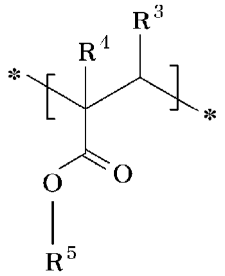

.

Chemical Formula 6:

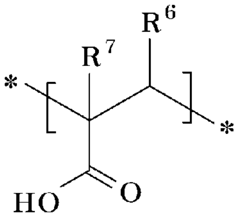

.

Chemical Formula 7:

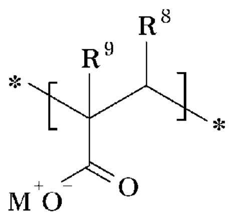

.

In Chemical Formula 5 to Chemical Formula 7,

$R^3$, $R^4$, $R^6$, $R^7$, $R^8$, and $R^9$ each independently is or includes hydrogen or a methyl group,
$R^5$ is or includes a substituted or unsubstituted $C_1$ to $C_{20}$ alkyl group, and
M is or includes an alkali metal.

The structural unit derived from a (meth)acrylate may be derived from at least one of alkyl ester (meth)acrylic acid, perfluoroalkyl ester (meth)acrylic acid, and a (meth)acrylate having a functional group in the side chain, for example, from alkyl ester (meth)acrylic acid. In addition, the number of carbon atoms in an alkyl or perfluoroalkyl group binding to the non-carbonyl oxygen atom of the alkyl ester (meth)acrylic acid or perfluoroalkyl ester (meth)acrylic acid may be for example in a range of 1 to 20, or for example, 1 to 10, and for example, 1 to 5.

Examples of alkyl ester (meth)acrylic acids in which the number of carbon atoms of the alkyl or perfluoroalkyl group binding to the non-carbonyl oxygen atom is in a range of 1 to 5 may include at least one of acrylic acid alkyl esters such as at least one of acrylic acid methyl, acrylic acid ethyl, acrylic acid n-propyl, acrylic acid isopropyl, acrylic acid n-butyl, and acrylic acid t-butyl; acrylic acid 2-(perfluoroalkyl)ethyl such as acrylic acid 2-(perfluorobutyl) ethyl and acrylic acid 2-(perfluoropentyl)ethyl; a methacrylic acid alkyl ester such as at least one of methacrylic acid methyl, methacrylic acid

ethyl, methacrylic acid n-propyl, methacrylic acid isopropyl, methacrylic acid n-butyl, and methacrylic acid t-butyl; and a methacrylic acid 2-(perfluoroalkyl)ethyl such as at least one of methacrylic acid 2-(perfluorobutyl)ethyl, methacrylic acid 2-(perfluoropentyl)ethyl, and methacrylic acid 2-(perfluoroalkyl)ethyl.

Other alkyl ester (meth)acrylic acids may include acrylic acid alkyl ester in which the number of carbons of an alkyl group binding to a non-carbonyl oxygen atom is in a range of 6 to 18, such as acrylic acid n-hexyl, acrylic acid 2-ethylhexyl, acrylic acid nonyl, acrylic acid lauryl, acrylic acid stearyl, acrylic acid cyclohexyl, and acrylic acid isobonyl; methacrylic acid alkyl ester in which the number of carbons of an alkyl group binding to a non-carbonyl oxygen atom is in a range of 6 to 18, such as methacrylic acid n-hexyl, methacrylic acid 2-ethylhexyl, methacrylic acid octyl, methacrylic acid isodecyl, methacrylic acid lauryl, methacrylic acid tridecyl, methacrylic acid stearyl, and methacrylic acid cyclohexyl; acrylic acid 2-(perfluoroalkyl) ethyl in which the number of carbons of an alkyl group binding to a non-carbonyl oxygen atom is in a range of 6 to 18, such as acrylic acid 2-(perfluorohexyl)ethyl, acrylic acid 2-(perfluorooctyl) ethyl, acrylic acid 2-(perfluorononyl) ethyl, acrylic acid 2-(perfluorodecyl) ethyl, acrylic acid 2-(perfluorododecyl) ethyl, acrylic acid 2-(perfluorotetradecyl) ethyl, acrylic acid 2-(perfluorohexadecyl) ethyl; and methacrylic acid 2-(perfluoroalkyl) ethyl in which the number of carbons of an alkyl group binding to a non-carbonyl oxygen atom is in a range of 6 to 18, such as methacrylic acid 2-(perfluorohexyl) ethyl, methacrylic acid 2-(perfluorooctyl) ethyl, methacrylic acid 2-(perfluorononyl) ethyl, methacrylic acid 2-(perfluorodecyl) ethyl, methacrylic acid 2-(perfluorododecyl) ethyl, methacrylic acid 2-(perfluorotetradecyl) ethyl, methacrylic acid 2-(perfluorohexadecyl) ethyl.

The structural unit derived from (meth)acrylic acid or (meth)acrylate, or a salt thereof may include the structural unit represented by Chemical Formula 5, the structural unit represented by Chemical Formula 6, and the structural unit represented by Chemical Formula 7 independently or in combination, and when the above-mentioned structural units are included together, the structural unit represented by Chemical Formula 5; and total of the structural unit represented by Chemical Formula 6 and the structural unit represented by Chemical Formula 7 may be included at a molar ratio in a range of 10:1 to 1:1, for example 6:1 to 1:1, and for example 3:1 to 1:1.

The (meth)acryl-based binder may be represented by, for example, Chemical Formula 8 below.

Chemical Formula 8:

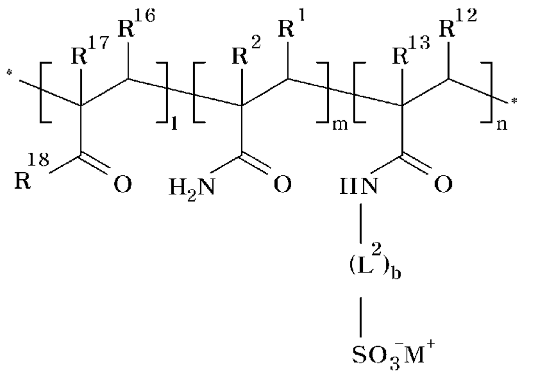

In Chemical Formula 8,

$R^1$, $R^2$, $R^{12}$, $R^{13}$, $R^{16}$, and $R^{17}$ each independently is or includes hydrogen or a methyl group,
$R^{18}$ is or includes OR or $O^-M^+$, R is or includes hydrogen or a $C_1$ to $C_6$ alkyl group, and M is or includes an alkali metal,
$L^2$ is or includes at least one of a substituted or unsubstituted $C_1$ to $C_{10}$ alkylene group, a substituted or unsubstituted $C_3$ to $C_{20}$ cycloalkylene group, a substituted or unsubstituted $C_6$ to $C_{20}$ arylene group, or a substituted or unsubstituted $C_3$ to $C_{20}$ heterocyclic group,
b is an integer in a range of 0 to 2,
M is or includes an alkali metal,
l, m and n indicate the molar ratio of each unit.

The alkali metal may be or include at least one of lithium, sodium potassium, rubidium, or cesium.

For example, in Chemical Formula 8, l+m+n may be equal to 1. In addition, $0.05 \leq (l+n) \leq 0.45$, $0.55 \leq m \leq 0.95$, and for example, $0 < l \leq 0.4$, $0 < n \leq 0.1$, $0.8 \leq m \leq 0.9$, $0 < l \leq 0.1$, and $0 < n \leq 0.1$, or $0.8 \leq m \leq 0.9$, $0.01 \leq l \leq 0.1$, and $0.01 \leq n \leq 0$.

For example, in Chemical Formula 8, $L^2$ may be or include a substituted or unsubstituted $C_1$ to $C_{10}$ alkylene group, and b may be or equal to 1.

In the (meth)acryl-based binder, a structural unit that is substituted with an alkali metal ($M^+$) may be present at a

range of 50 mol% to 100 mol%, for example, 60 mol% to 90 mol% or 70 mol% to 90 mol% with respect to 100 mol% of the total amount of the (meth)acrylamidosulfonic acid structural unit. When the above range is satisfied, the (meth)acryl-based binder and a separator including the same may exhibit desired or improved adhesiveness, heat resistance, and oxidation resistance.

The (meth)acryl-based binder may further include a unit other than the above-described units. For example, the (meth)acryl-based binder may further include a unit derived from an alkyl(meth)acrylate, a unit derived from a diene, a unit derived from styrene, a unit containing an ester, a unit containing a carbonate group, or a combination thereof.

The (meth)acryl-based binder may have various forms, such as an alternating polymer in which the above units are distributed alternately, a random polymer in which the above units are distributed randomly, or a graft polymer to which some structural units are grafted.

The weight average molecular weight of the (meth)acryl-based binder may be in a range of 350,000 g/mol to 970,000 g/mol, for example, 450,000 g/mol to 970,000 g/mol, or 450,000 g/mol to 700,000 g/mol. When the weight average molecular weight of the (meth)acryl-based binder satisfies the above range, the (meth)acryl-based binder and a separator including the same may exhibit desired or improved adhesiveness, heat resistance, and air permeability. The "weight average molecular weight" may be or include a polystyrene-converted average molecular weight measured using gel permeation chromatography.

The (meth)acryl-based binder may be prepared by a variety of known methods including emulsion polymerization, suspension polymerization, bulk polymerization, and solution polymerization.

The (meth)acryl-based binder may be prepared by a solution polymerization method.

According to one example embodiment, the (meth)acryl-based binder may be included in the coating layer of the separator in the form of a film.

The (meth)acryl-based binder may be included at a range of 30 wt% to 70 wt%, for example, 30,31,32,33,34,35,36,37,38,39,40,41,42,43,44,45,46,47,48,49,50,51,52,53,54,55,56,57,58,59, 60,61,62,63,64,65,66,67,68,69,70wt%, 30 wt% to 60 wt%, or 40 wt% to 60 wt% of a total of the (meth)acryl-based binder; the crosslinking agent; and the carboxyalkyl cellulose or a salt thereof. Within the above range, the separator may exhibit a heat resistance-improving effect in an electrolyte.

The crosslinking agent includes an aziridine-based crosslinking agent.

The aziridine-based crosslinking agent may crosslink the (meth)acryl-based binder and make it possible for the separator to reach the drying shrinkage range and the shrinkage range in an electrolyte.

The aziridine-based crosslinking agent may be or include a bifunctional or higher aziridine-based crosslinking agent. Herein, "bifunctional or higher" means that there are two or more aziridine groups in a molecule. According to one example embodiment, the aziridine-based crosslinking agent may be or include a bifunctional or trifunctional aziridine-based crosslinking agent.

For example, the aziridine-based crosslinking agent may include one or more of N,N'-toluene-2,4-bis(1-aziridine carboxamide), N,N'-(methylenedi-p-phenylene)bis(aziridine-1-carboxamide), triethylenemelamine, 1,1-isophthaloyl bis(2-methylaziridine), tris(1-aziridinyl)phosphine oxide, N,N-hexamethylene-bis(aziridine carboxamide), trimethylolpropane tris(2-methyl-1-aziridinepropionate), trimethylolpropane tris(beta-N-aziridinyl)propionate, and pentaerythritol tris(3-(1-aziridinyl)propionate).

The crosslinking agent, for example, the aziridine-based crosslinking agent, may be included at an appropriate content with respect to the binder, for example, the (meth)acryl-based binder, and the carboxyalkyl cellulose or a salt thereof.

According to one example embodiment, the crosslinking agent may be included at a range of 5 wt% to 30 wt%, for example, 5,6,7,8,9,10,11,12,13,14,15,16,17,18,19,20,21,22,23,24,25,26,27,28,29,30wt%, 10 wt% to 30 wt% or 10 wt% to 20 wt% of a total of the (meth)acryl-based binder; the crosslinking agent; and the carboxyalkyl cellulose or a salt thereof. Within the above range, the separator may exhibit an effect of improving heat resistance in an electrolyte.

The crosslinking agent, for example, the aziridine-based crosslinking agent, may be included at an appropriate content with respect to the binder, for example, the (meth)acryl-based binder. For example, the crosslinking agent may be included at a range of about 5 parts by weight to about 50 parts by weight, for example, 5,6,7,8,9,10,11,12,13,14,15,16,17,18,19,20,21,22,23,24,25,26,27,28,29,30,31,32,33,34,35,36, 37,38,39,40,41,42,43,44,45,46,47,48,49,50parts by weight, 10 parts by weight to 50 parts by weight or 10 parts by weight to 40 parts by weight with respect to 100 parts by weight of the (meth)acryl-based binder. Within the above range, the separator may exhibit a heat resistance effect.

The carboxyalkyl cellulose or a salt thereof has a cyclic structure in the molecule, and a carboxyl group in the molecule. This can react with the crosslinking agent to increase the modulus of the coating layer, which may readily lower the drying shrinkage and the shrinkage in an electrolyte.

The carboxyalkyl cellulose may be or include, for example, carboxymethyl cellulose.

A salt of the carboxyalkyl cellulose may be or include, for example, a monovalent metal salt of carboxyalkyl cellulose, for example, a sodium salt of carboxyalkyl cellulose.

The carboxyalkyl cellulose or a salt thereof may be included at an appropriate content with respect to the binder, for example, the (meth)acryl-based binder, and the crosslinking agent.

According to one example embodiment, the carboxyalkyl cellulose or a salt thereof may be included at a range of 20 wt% to 70 wt%, for example, 20,21,22,23,24,25,26,27,28,29,30,31,32,33,34,35,36,37,38,39,40,41,42,43,44,45,46,47,48,49, 50,51,52,53,54,55,56,57,58,59,60,61,62,63,64,65,66,67,68,69,70wt%, 20 wt% to 65 wt%, 20 wt% to 60 wt%, 30 to 70 wt%, 30 wt% to 60 wt%, or 40 wt% to 60 wt% of a total of the (meth)acryl-based binder; the crosslinking agent; and the carboxyalkyl cellulose or a salt thereof. Within the above range, the separator may improve the heat resistance in an electrolyte.

The filler may include a filler having a particle size (D100) of 0.7 μm or less. Within the above range, in the combination of the (meth)acryl-based binder, the crosslinking agent, the carboxyalkyl cellulose or a salt thereof, it may be possible to reach the drying shrinkage and the shrinkage in an electrolyte. For example, the filler may have a particle size (D100) in a range of 0.01, 0.05, 0.1, 0.15, 0.2, 0.25, 0.3, 0.35, 0.4, 0.45, 0.5, 0.55, 0.6, 0.65, 0.7 μm, 0.1 μm to 0.7 μm, or 0.5 μm to 0.7 μm.

According to one example embodiment, the filler may have a particle size (D50) of 0.4 μm or less, for example, 0.35 μm or less, 0.3 μm or less, or 0.1 μm to 0.3 μm. Within the above range, the separator may exhibit a heat resistance-improving effect.

According to one example embodiment, the filter having a particle size (D100) of 0.7 μm or less may be included at 95 wt% or more, for example, for example, 95 wt% to 100 wt%, 98 wt% to 100 wt%, or 100 wt% of the total filler in the coating layer. Within the above range, the effect of the separator can be readily implemented.

According to one example embodiment, the filler may not be surface-modified.

The filler may be or include, for example, an inorganic filler, an organic filler, an organic/inorganic composite filler, or a combination thereof. The inorganic filler may be or include a ceramic material that can improve heat resistance. The inorganic filler may include, for example, at least one of a metal oxide, a metalloid oxide, a metal fluoride, a metal hydroxide, or a combination thereof. The inorganic filler may include, for example, at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but the present disclosure is not limited thereto. The organic filler may include an acryl compound, an imide compound, an amide compound, or a combination thereof, but the present disclosure is not limited thereto. The organic filler may have a core-shell structure, but the present disclosure is not limited thereto. For example, the filler is or includes boehmite.

The filler may be spherical, plate-shaped, cubic, or amorphous. For example, the filler is cubic, and may have significantly low shrinkage.

The filler may be included at an appropriate content with respect to the binder, for example, the (meth)acryl-based binder. According to one example embodiment, the (meth)acryl-based binder : filler mass ratio may be in a range of 1:10 to 1:50, for example, 1:20 to 1:30. Within the above range, the separator may exhibit an effect of improving heat resistance in an electrolyte.

The filler may be included at a range of 50 wt% to 99 wt%, 70 wt% to 99 wt%, 75 wt% to 99 wt%, 80 wt% to 99 wt%, 85 wt% to 99 wt%, 90 wt% to 99 wt%, or 95 wt% to 99 wt% of the total amount of the coating layer. When the filler is included within the above range, desired or improved heat resistance, durability, oxidation resistance, and safety may be exhibited.

The coating layer may have a thickness in a range of 0.01 μm to 20 μm, and within the above range, the coating layer may have a thickness of 1 μm to 10 μm, 1 μm to 5 μm, or 1 μm to 3 μm.

The ratio of the thickness of the coating layer to the thickness of the porous substrate may be in a range of 0.05 to 0.5, for example, 0.05 to 0.4, 0.05 to 0.3, or 0.1 to 0.2. Within the above range, the separator may exhibit desired or improved air permeability, heat resistance, and adhesiveness. Herein, "thickness of the coating layer" means the thickness of one coating layer when the coating layer is formed only on one surface of the porous substrate, and when the coating layers are formed on both surfaces of the porous substrate, the thickness means the total thickness of the two coating layers.

## Adhesive layer

The adhesive layer includes a crosslinked (meth)acryl-based adhesive binder. The crosslinked (meth)acryl-based adhesive binder may lower a moisture content, thereby further lowering the shrinkage of the separator and providing desired or improved safety to a battery exposed to heat.

The crosslinked (meth)acryl-based adhesive binder may be highly crosslinked to improve heat resistance, thereby reducing or suppressing the shrinkage of the porous substrate at high temperatures. According to one example embodiment, the adhesive binder may include at least one of an acrylate-based compound or a derivative thereof, a diallyl phthalate-based compound or a derivative thereof, a polyimide-based compound or a derivative thereof, or a polyurethane-based compound or a derivative thereof.

For example, the crosslinked (meth)acryl-based adhesive binder may be or include crosslinked polymethylmethacrylate particles. The crosslinked (meth)acryl-based adhesive binder may be prepared by a conventional method known in the art. The crosslinked polymer filler may be prepared by adding a crosslinking agent in the monomer polymerization step.

The crosslinked (meth)acryl-based adhesive binder may be a particle, and may have a particle size (D50) of 0.7 μm or less, for example, 0.5 μm or less, or 0.2 to 0.7 μm. Within the above range, an adhesive layer may be formed with a substantially uniform thickness, thereby reducing the thickness of the separator, and providing desired or improved safety to a battery exposed to heat.

The adhesive binder may be coated at a loading amount in a range of 0.01 g/$m^2$ to 0.5 g/$m^2$, for example, 0.06 g/$m^2$ to 0.25 g/$m^2$, or 0.07 g/$m^2$ to 0.21 g/$m^2$ on a negative electrode surface, for example, the surface of the coating layer. Within the above range, the dry bending strength of the separator can be readily increased.

## Porous substrate

A porous substrate may be or include a substrate that has multiple pores, and is commonly used in electrochemical devices. The porous substrate may be, but not limited to, a polymer film formed of or including any one polymer such as or including at least one of polyolefins such as polyethylene and polypropylene, polyesters such as polyethylene terephthalate, polybutylene terephthalate and polyethylene naphthalate, polyacetal, polyamide, polyimide, polycarbonate, polyetheretherketone, polyaryletherketone, polyetherimide, polyamideimide, polybenzimidazole, polyethersulfone, polyphenylene oxide, cyclic olefin copolymers, polyphenylene sulfide, glass fiber, Teflon, and polytetrafluoroethylene, or a copolymer or mixture of two or more thereof.

The porous substrate may be or include, for example, a polyolefin-based substrate including a polyolefin, and the polyolefin-based substrate may contribute to improving the safety of the battery due to a desired or improved shut down function. The polyolefin-based substrate may be or include at least one of, for example, a polyethylene single-layer film, a polypropylene single-layer film, a polyethylene/polypropylene double-layer film, a polypropylene/polyethylene/polypropylene triple-layer film, and a polyethylene/polypropylene/polyethylene triple-layer film. In addition, the polyolefin-based resin may include a non-olefin resin, other than olefin resins, or a copolymer of an olefin monomer and a non-olefin monomer.

The porous substrate may have a thickness in a range of 1 μm to 40 μm, for example, 1 μm to 30 μm, 1 μm to 20 μm, or 5 μm to 15 μm.

The separator for a rechargeable lithium battery according to one example embodiment may exhibit desired or improved air permeability of, for example, less than 200 sec/100cc, 190 sec/100cc or less, or 180 sec/100cc or less. For example, the separator may have an air permeability value of less than 40 sec/100cc·1 μm, for example, 30 sec/100cc·1 μm or less, or 25 sec/100cc·1 μm or less per unit thickness. Herein, the air permeability is the time (seconds) it takes for 100 cc of air to pass through the unit thickness of the separator. The air permeability per unit thickness may be obtained by measuring the air permeability for the total thickness of the separator, and dividing the measured air permeability by the thickness. The air permeability may be measured by using an air permeability measuring device (Asahi Seiko, EG01-55-1MR) to measure the time (seconds) it takes for 100 cc of air to pass through.

A separator for a rechargeable battery according to one example embodiment may be formed by applying a composition for forming a coating layer on one surface, or on both surfaces, of a porous substrate, and drying and curing the resulting composition. The curing may be performed using a conventional method known to one of ordinary skill in the art.

FIG. 1 is a cross-sectional view of a separator for a rechargeable lithium battery, according to one example embodiment. Referring to FIG. 1, the separator for a rechargeable lithium battery includes a porous substrate 1, and a laminate 2 of a coating layer 5 and an adhesive layer 7 located on both surfaces of the porous substrate 1. The laminate 2 may include the coating layer (carboxyalkyl cellulose is not illustrated) 5, which includes a filler 3 and a crosslinked product 4 of a (meth)acryl-based binder and a crosslinking agent; and the adhesive layer 7, which is located on the coating layer 5, includes an adhesive binder 6.

## Rechargeable lithium battery

According to one example embodiment, the rechargeable lithium battery includes the separator for a rechargeable lithium battery, a positive electrode, and a negative electrode.

The separator for the rechargeable lithium battery refers to the description described above. The separator for rechargeable lithium battery may be positioned between the positive electrode and the negative electrode.

A positive electrode for a rechargeable lithium battery may include a current collector and a positive electrode active material layer on the current collector. The positive electrode active material layer may include a positive electrode active material, and may further include a binder and/or a conductive material. For example, the positive electrode may further include an additive that can constitute a sacrificial positive electrode.

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof, may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. $Li_aA_{1-b}X_bO_{2-c}D_e$ (0.90≤a≤1.8, 0≤b≤0.5, and 0≤c≤0.05); $Li_aMn_{2-b}X_bO_{4-c}D_c$ (0.90≤a≤1.8, 0≤b≤0.5, and 0≤c≤0.05); $Li_aNi_{1-b-c}Co_bX_cO_{2-\alpha}D_\alpha$ (0.90≤a≤1.8, 0≤b≤0.5, 0≤c≤0.5, and 0<α<2); $Li_aNi_{1-b-c}Mn_bX_cO_{2-\alpha}D_\alpha$ (0.90≤a≤1.8, 0≤b≤0.5, 0≤c≤0.5, and 0<α<2); $Li_aNi_bCo_cL^1{}_aG_eO_2$ (0.90≤a≤1.8, 0≤b≤0.9, 0≤c≤0.5, 0≤d≤0.5, and 0≤e≤0.1); $Li_aNiG_bO_2$ (0.90≤a≤1.8 and 0.001≤b≤0.1); $Li_aCoG_bO_2$ (0.90≤a≤1.8 and 0.001≤b≤0.1); $Li_aMn_{1-b}G_bO_2$ (0.90≤a≤1.8 and 0.001≤b≤0.1); $Li_aMn_2G_bO_4$ (0.90≤a≤1.8 and 0.001≤b≤0.1); $Li_aMn_{1-g}G_gPO_4$ (0.90≤a≤1.8 and 0≤g≤0.5); $Li_{(3-f)}Fe_2(PO_4)_3$ (0≤f≤2); or $Li_aFePO_4$ (0.90≤a≤1.8).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, a high nickel-based positive electrode active material having a nickel content of greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of the metal excluding lithium in the lithium transition metal composite oxide. The high-nickel-based positive electrode active material may be capable of achieving high capacity, and can be applied to a high-capacity, high-density rechargeable lithium battery.

An amount of the positive electrode active material may be in a range of 90 wt% to 99.5 wt% based on 100 wt% of the positive electrode active material layer. Amounts of the binder and of the conductive material may be in a range of 0.5 wt% to 5 wt%, respectively, based on 100 wt% of the positive electrode active material layer.

The binder attaches the positive electrode active material particles to each other, and attaches the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any material that does not cause chemical change (e.g., does not cause an undesirable chemical change in the rechargeable lithium battery), and that conducts electrons, can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

Al may be used as the current collector, but the current collector is not limited thereto.

The negative electrode for a rechargeable lithium battery may include a current collector, and a negative electrode active material layer on the current collector. The negative electrode active material layer may include a negative electrode active material, and may further include a binder and/or a conductive material (e.g., an electrically conductive material).

For example, the negative electrode active material layer may include 90 wt% to 99 wt% of the negative electrode active material, 0.5 wt% to 5 wt% of the binder, and 0 wt% to 5 wt% of the conductive material.

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one

of silicon, a silicon-carbon composite, SiOx ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

The binder may attach the negative electrode active material particles to each other, and also attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change (e.g., does not cause an undesirable chemical change in the rechargeable lithium battery), and that conducts electrons, can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

The electrolyte solution for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol,

and the like. The aprotic solvent may include nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more solvents.

In addition, when using a carbonate-based solvent, a cyclic carbonate and a chain carbonate may be mixed, and the cyclic carbonate and the chain carbonate may be mixed in a volume ratio in a range of 1:1 to 1:9.

The lithium salt dissolved in the organic solvent supplies lithium ions in a battery, enables an operation of a rechargeable lithium battery, and improves transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO2)(C_yF_{2y+1}SO_2)$ (wherein x and y are integers in a range of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

According to one example embodiment, the positive electrode, the negative electrode and the separator may form a stacked electrode assembly. The stacked electrode assembly includes the positive electrode, the negative electrode, and a separator positioned between the positive electrode and the negative electrode. The separator has a continuous sheet shape, and the separator may be folded in a first direction to surround the positive electrode, and folded in a second direction opposite to the first direction to surround the negative electrode.

FIG. 2 is a conceptual diagram of a stacked electrode assembly according to one example embodiment.

Referring to FIG. 2, the stacked electrode assembly includes a positive electrode 110 having a positive electrode terminal 111, a negative electrode 120 having a negative electrode terminal 121, and a separator 130 positioned between the positive electrode 110 and the negative electrode 120. Referring to FIG. 2, the separator 130 has a continuous sheet shape, and is alternately folded in a first direction and in a second direction opposite thereto. Therefore, the vertical cross section of the separator 130 in the stacked electrode assembly may have a crisscross, or zigzag shape.

The rechargeable lithium battery may be classified into cylindrical, prismatic, pouch, or coin-type batteries, and the like depending on shape thereof. FIGS. 3 to 6 are schematic views illustrating a rechargeable lithium battery according to an example embodiment. FIG. 3 shows a cylindrical battery, FIG. 4 shows a prismatic battery, and FIGS. 5 and 6 show pouch-type batteries. Referring to FIGS. 3 to 6, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 3. In FIG. 4, the rechargeable lithium battery 100 may include a positive lead tab 11, a positive terminal 12 connected to the positive lead tab 11, a negative lead tab 21, and a negative terminal 22 connected to the negative lead tab 21. As shown in FIGS. 5 and 6, the rechargeable lithium battery 100 may include an electrode tab 70 illustrated in FIG. 6, or, for example, a positive electrode tab 71 and a negative electrode tab 72 illustrated in FIG. 5, the electrode tabs 70/71/72 forming an electric path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, examples and comparative examples of the present disclosure are described. However, the following examples are merely examples of the present disclosure, and the present disclosure is not limited thereto.

**Preparation Example 1**

After adding distilled water (6361 g) and acrylic acid (1.0 mol), acrylamide (8.5 mol), potassium persulfate (0.01 mol), 2-acrylamido-2-methylpropanesulfonic acid (0.5 mol), and a 5N lithium hydroxide aqueous solution (1.05 equiv with respect to the total amount of 2-acrylamido-2-methylpropanesulfonic acid) to a 10 L 4-neck flask equipped with a stirrer, a thermometer, and a condenser, the operation of reducing the internal pressure to 10 mmHg using a diaphragm pump and returning the internal pressure to normal pressure with nitrogen was repeated three times.

The reaction was carried out for 12 hours while controlling the temperature of the reaction solution to be stabilized between 65 °C to 70 °C. After cooling to room temperature, the pH of the reaction solution was adjusted to a range of 7 to 8 using a 25% aqueous ammonia solution.

In this way, poly(acrylic acid-co-acrylic acid lithium salt-co-acrylamide-co-2-acrylamido-2-methylpropanesulfonic acid lithium salt) was prepared. The molar ratio of acrylic acid + acrylic acid lithium salt, acrylamide, and 2-acrylamido-2-methylpropanesulfonic acid lithium salt was 10:85:5. The proportion of the non-volatile component was measured after taking approximately 10 mL of the reaction solution (reaction product), and the result was 9.5wt% (theoretical value: 10wt%).

**Preparation Example 2**

An acryl-based binder was prepared in the same manner as in Preparation Example 1, with a difference that acrylamide and 2-acrylamido-2-methylpropanesufonic acid were used, and acrylic acid was not used. The molar ratio of the acrylamide and the 2-acrylamido-2-methylpropanesulfonic acid lithium salt was 74:26. The non-volatile component of the reaction solution was 9.0 wt% (theoretical value: 10wt%).

**Example 1**

The acryl-based binder (10 wt% in distilled water) prepared in Preparation Example 1 and boehmite (particle size (D100): 0.5 μm, particle size (D50): 0.2 μm, cubic type) as a filler were mixed in an acryl-based binder: filler mass ratio of 1:20 based on solid content, added to a water solvent, milled using a bead mill at 25 °C for 30 minutes and dispersed, thereby preparing a dispersion.

Trimethylolpropane tris(2-methyl-1-aziridinepropionate) (trifunctional aziridine-based crosslinking agent) as an aziridine-based crosslinking agent, and carboxymethyl cellulose (CMC) were added to the dispersion, and water was added to have a total solid content of 20 wt%, thereby preparing a composition for a coating layer. Herein, the acryl-based binder: the carboxymethyl cellulose: the aziridine-based crosslinking agent were included at 45 parts by weight:45 parts by weight: 10 parts by weight of a total of 100 parts by weight.

Both surfaces of a polyethylene-based film (thickness: 8 μm, SK, air permeability: 120 sec/100 cc, pin puncture: 480 kgf) as a porous substrate were coated with the composition for forming a coating layer to a thickness of 1.5 μm using a die-coating method, dried in an oven at 80 °C for 16 hours, and aged, thereby forming a coating layer.

Both surfaces of the coating layer were coated with a crosslinked polymethylmethacrylate polymer (crosslinked PMMA, particle size (D50): 0.5 μm) as an adhesive binder, which had been diluted to a solid content of 2 wt%, to 0.5 μm and dried at 50 °C for 10 minutes to form an adhesive layer with a total thickness of 1.0 μm (a loading amount (loading amount per unit area) for an electrode plate of 0.21 g/$m^2$), thereby manufacturing a separator for a rechargeable lithium battery.

**Examples** 2 to 5

Separators were manufactured in the same manner as in Example 1, with a difference that the composition for a coating layer and the loading amount of the adhesive layer were changed as shown in Table 1 below.

Example 6

A separator was manufactured in the same manner as in Example 1, with a difference that the binder of Preparation Example 2 was used instead of the acryl-based binder of Preparation Example 1.

**Comparative Examples 1 to 3**

Separators were manufactured in the same manner as in Example 1, with a difference that the composition for a coating layer and the loading amount of the adhesive layer were changed as shown in Table 1 below.

**Comparative Example 4**

A separator was manufactured in the same manner as in Example 1, with a difference that the composition for a coating layer was changed as shown in Table 1 below, and the adhesive layer was not formed.

**Comparative Example 5**

The acryl-based binder (10 wt% in distilled water) prepared in Preparation Example 1 and boehmite (particle size (D100): 0.5 μm, particle size (D50): 0.2 μm, cubic type) as a filler were mixed in an acryl-based binder: filler mass ratio of 1:20 based on solid content and put into a water solvent, milled using a bead mill at 25 °C for 30 minutes and dispersed, thereby preparing a dispersion. Trimethylolpropane tris(2-methyl-1-aziridinepropionate) as an aziridine-based crosslinking agent and carboxymethyl cellulose (CMC) were added to the dispersion, water was added to have a total solid content of 20 wt%, and a crosslinked polymethylmethacrylate polymer (crosslinked PMMA, particle size (D50): 0.5 μm) was included as an adhesive binder, thereby preparing a composition for a coating layer. Herein, the acryl-based binder: the carboxymethyl cellulose: the aziridine-based crosslinking agent were included at 45 parts by weight:45 parts by weight: 10 parts by weight of a total of 100 parts by weight. Herein, the crosslinked polymethylmethacrylate polymer in the composition for a coating layer was included at 0.05 g/$m^2$ with respect to the surface of an electrode plate.

Both surfaces of the polyethylene-based film (thickness: 8 μm, SK, air permeability: 120 sec/100cc, pin puncture: 480 kgf) as a porous substrate were coated with the composition for forming a coating layer to a thickness of 1.5 μm by a die coating method, dried in an oven at 80 °C for 16 hours and aged to form a coating layer, thereby manufacturing a separator.

**Drying shrinkage (units:** %)

The separators for a rechargeable lithium battery of Examples and Comparative Examples were cut into a size of 8 cm × 8 cm, thereby preparing samples. Shrinkage in each of the mechanical direction (MD) and the transverse direction (TD) was calculated by drawing a 5 cm × 5 cm square on the surface of each sample, leaving the sample in an oven at 150 °C for 1 hour after placing the sample between paper or alumina powder, and then measuring the dimensions of the sides of the square that had been drawn. The shrinkages were calculated in accordance with the following Equation 1.

Equation 1:

$$\text{Shrinkage} = (L0 - L1)/L0 \times 100.$$

L0: the initial length of the separator, L1: the length of the separator after leaving the separator at 150 °C for 1 hour.

**Shrinkage in electrolyte (units:** %)

The separators for a rechargeable lithium battery of Examples and Comparative Examples were cut into a size of 8 cm × 8 cm, thereby preparing samples. A 5 cm × 5 cm square was drawn on the surface of each sample.

A positive electrode slurry was prepared by mixing 97 wt% of LiCoNiAl as a positive electrode active material, 1.5 wt% of carbon nanotubes as a conductive material, and 1.5 wt% of polyvinyl fluoride and adding water.

A positive electrode was manufactured by applying the prepared positive electrode slurry on an aluminum foil, drying and rolling the prepared positive electrode slurry under pressure.

A negative electrode active material slurry was prepared by mixing 97.4 wt% of a negative electrode active material, 1.0 wt% of carboxymethylcellulose, 1.5 wt% of styrene-butadiene-based rubber, and 0.1 wt% of carbon nanotubes as a conductive material. A silicon-based negative electrode active material was used as the negative electrode active material. A negative electrode was manufactured by applying the prepared negative electrode slurry on a copper foil and drying and rolling the prepared negative electrode slurry.

One sheet of the sample was placed between the positive electrode and negative electrode to make three sets of positive electrode-sample-negative electrode laminates, and then the laminates were put into a pouch. The laminate was completely saturated with an electrolyte by injecting 2 g of an electrolyte (ethylene carbonate, ethyl methyl carbonate, and dimethyl carbonate (volume ratio of 30:50:20) in which 1.5M $LiPF_6$ was dissolved), sealed and then left at 25 °C for 12 hours. After leaving the resulting product in an oven at 150 °C for 1 hour, the sample was taken out to measure the dimensions of the sides of the square that had been drawn, followed by calculating the shrinkage in each of the mechanical direction (MD) and the transverse direction (TD). The shrinkage could be calculated according to the above Equation 1.

**Dry bending strength (units: N)**

A jelly roll (D) was manufactured by laminating a positive electrode (B), a separator (A), a negative electrode (C), and a separator (A) in this order in a zig-zag manner, as shown in FIG. 7. As shown in FIG. 8, the jelly roll (D) that had undergone lamination was placed between upper jig (E) and lower jig (F) that had been heated in advance to 75 °C and then pressed for 90 seconds using a heat press device. The heat-pressed jelly roll was linked to the Nexygen Plus program and then subjected a 3-point bending test using Lloyd UTM (universal testing machine) equipment. As shown in FIG. 8, the jelly roll (D) was placed on the lower jigs (F) located at the left end and right end, the upper jig (E) located in the middle was lowered at a specific speed to apply a force, and then the force (N) at the point of the jelly roll (D) breaking was calculated.

**Substrate cohesive force (units: N)**

A test was performed according to Korean Industrial Standard KS-A-01107 (testing method for adhesive tapes and adhesive sheets). Each of the separators manufactured in Examples and Comparative Examples was cut into a size of 3 cm x 8 cm (width x length), tapes (Nitto 31B) were put on both surfaces of the separator to form a specimen, and then the specimen was pressed through reciprocation once at a speed of 300 mm/min using a compression roller with a load of 2 kg. After 30 minutes of pressing, the specimen was turned 180° and approximately 25 mm was peeled off, and the separator and the tape attached to one surface of the separator were fixed to the upper clip of a tensile strength tester (Instron Series

1X/s automated materials tester-3343, Instron). The tape attached to the other surface of the separator was fixed to the lower clip and the pressure when the adhesive layer and the coating layer of the separator were peeled off of the porous substrate was measured by pulling at a tensile speed of 60 mm/min.

**Hot-tip Test (units: mm)**

As shown in FIG. 9, a sample (G) was prepared by cutting the separator to a size of 5 cm x 5 cm, the corners of the sample (G) were fixed with magnets (H), and the sample was placed on a jig (I). A rod (J) formed with a tip with a diameter (Ø) of 2 mm was heated to 400 °C and penetrated the center of the sample surface, and the diameter length (mm) of the hole created thereby was measured.

Table 1:

| | Coating layer | | | | Adhesive layer | | Drying shrinkag e | | Shrinka ge in electroly te | | Dry bendi ng streng th | Substr ate cohesi ve force | Ho t tip tes t |
|---|---|---|---|---|---|---|---|---|---|---|---|---|---|
| | Binder1 | Binde r2 | Crosslink ing agent | Weigh t ratio | Adhesi ve Binder | Loadi ng amou nt | M D | T D | M D | T D | | | |
| Example 1 | Preparat ion Example 1 | CMC | Aziridine | 45/45/ 10 | Acryl | 0.21 | 1.5 | 1. 0 | 3 | 3 | 253 | 2.16 | 2.0 8 |
| Example 2 | Preparat ion Example 1 | CMC | Aziridine | 45/45/ 10 | Acryl | 0.18 | 1.5 | 1. 0 | 3 | 3 | 201 | 2.11 | 2.0 9 |
| Example 3 | Preparat ion Example 1 | CMC | Aziridine | 45/45/ 10 | Acryl | 0.07 | 1.5 | 1. 0 | 3 | 3 | 97 | 1.88 | 2.0 8 |
| Example 4 | Preparat ion Example 1 | CMC | Aziridine | 60/30/ 10 | Acryl | 0.20 | 4.7 | 2. 7 | 7 | 8 | 244 | 2.31 | 2.0 7 |
| Example 5 | Preparat ion Example 1 | CMC | Aziridine | 30/60/ 10 | Acryl | 0.20 | 3.5 | 3. 0 | 13 | 12 | 221 | 2.02 | 2.2 4 |
| Example 6 | Preparat ion Example 2 | CMC | Aziridine | 45/45/ 10 | Acryl | 0.20 | 1.2 | 1. 3 | 3 | 4 | 248 | 2.11 | 2.1 1 |
| Comparat ive Example 1 | Preparat ion Example 1 | - | Aziridine | 90/0/1 0 | Acryl | 0.20 | 3.0 | 2. 0 | 37 | 41 | 261 | 2.34 | 3.5 4 |
| Comparat ive Example 2 | Preparat ion Example 1 | - | - | 100/0/ 0 | Acryl | 0.20 | 2.7 | 2. 0 | 52 | 58 | 255 | 2.07 | 3.3 8 |
| Comparat ive Example 3 | Preparat ion Example 1 | CMC | - | 50/50/ 0 | Acryl | 0.20 | 10 | 13 | 50 | 61 | 211 | 1.97 | 3.4 3 |
| Comparat ive Example 4 | Preparat ion Example 1 | CMC | Aziridine | 25/25/ 50 | - | - | 2.5 | 2. 1 | 23 | 32 | 11 | 0.65 | 3.5 4 |
| Comparat ive Example 5 | Preparat ion Example 1 | CMC | Aziridine | 45/45/ 10 | Acryl* | 0.05* | 3.1 | 1. 4 | 38 | 27 | 88 | 2.23 | 2.3 8 |

*CMC: carboxymethyl cellulose,
*Comparative Example 5: the acryl-based adhesive binder is included in the coating layer.

As shown in Table 1 above, the separator for a lithium secondary battery of the example had a significantly low shrinkage rate in the electrolyte, and high dry bending strength and substrate bonding strength. In addition, the separator of the example had a significantly low hole diameter length when tested in a hot tip test, so that it could provide desired or improved safety in the heat exposure of the battery. However, the separator of the comparative example did not provide a desired or improved effect compared to the above-described example.

## Claims

1. A separator (30) for a rechargeable lithium battery (100), the separator (30) comprising:

   a porous substrate (1);
   a coating layer (5) on at least one surface of the porous substrate (1); and
   an adhesive layer (7) on one surface of the coating layer (5),
   wherein the coating layer (5) comprises:

      a crosslinked product of a binder (6);
      a cross-linking agent;
      a carboxyalkyl cellulose or a salt thereof; and
      a filler (3),

   the binder (6) comprises a (meth)acryl-based binder that includes a first structural unit derived from (meth)acryl amide and a second structural unit derived from (meth)acrylamidosulfonic acid or a salt thereof,
   the crosslinking agent includes an aziridine-based crosslinking agent, and
   the adhesive layer (7) includes a (meth)acryl-based adhesive binder.

2. The separator of claim 1, wherein the coating layer (5) comprises a composition including the (meth)acryl-based binder, the crosslinking agent, the carboxyalkyl cellulose or a salt thereof, and the filler (3).

3. The separator of claim 1 or 2, wherein the carboxyalkyl cellulose or a salt thereof comprises carboxymethyl cellulose or a salt thereof.

4. The separator of any one of the preceding claims, wherein the carboxyalkyl cellulose or a salt thereof is included at a range of 20 wt% to 70 wt% of a total of the (meth)acryl-based binder, the crosslinking agent, and the carboxyalkyl cellulose or a salt thereof.

5. The separator of any one of the preceding claims, wherein the aziridine-based crosslinking agent comprises one or more of N,N'-toluene-2,4-bis(1-aziridine carboxamide), N,N'-(methylenedi-p-phenylene)bis(aziridine-1-carboxamide), triethylenemelamine, 1,1-isophthaloyl bis(2-methylaziridine), tris(1-aziridinyl)phosphine oxide, N,N-hexamethylene-bis(aziridine carboxamide), trimethylolpropane tris(2-methyl-1-aziridinepropionate), trimethylolpropane tris(β-N-aziridinyl)propionate, and pentaerythritol tris(3-(1-aziridinyl)propionate).

6. The separator of any one of the preceding claims, wherein the filler (3) comprises a filler having a particle size (D100) of 0.7 μm or less measured using a laser diffraction method.

7. The separator of any one of the preceding claims, wherein the filler (3) is one of spherical, plate-shaped, cubic, and amorphous.

8. The separator of any one of the preceding claims, wherein a mass ratio of the (meth)acryl-based binder : the filler (3) is in a range of 1:10 to 1:50.

9. The separator of any one of the preceding claims, wherein:

   the (meth)acryl-based binder is included at a range of 30 wt% to 70 wt%,
   the crosslinking agent is included at a range of 5 wt% to 30 wt%, and
   the carboxyalkyl cellulose or a salt thereof is included at a range of 20 wt% to 65 wt% of a total of the (meth)acryl-based binder, the crosslinking agent, and the carboxyalkyl cellulose or a salt thereof.

**10.** The separator of any one of the preceding claims, wherein the first structural unit is represented by Chemical Formula 1:

Chemical Formula 1:

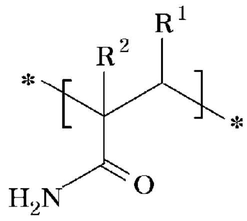

;

wherein in Chemical Formula 1,

$R^1$ and $R^2$ each independently comprises hydrogen or a methyl group, and
the second structural unit is represented by at least one of Chemical Formula 2, Chemical Formula 3, Chemical Formula 4, and a combination thereof:

Chemical Formula 2:

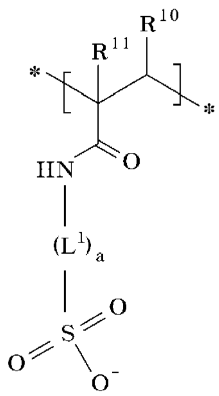

;

Chemical Formula 3:

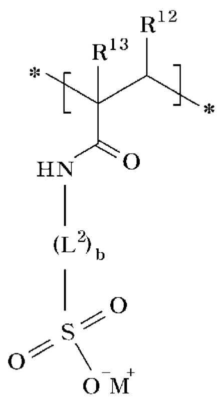

;

Chemical Formula 4:

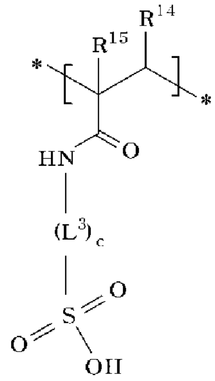

;

wherein in Chemical Formula 2 to Chemical Formula 4,
$R^{10}$, $R^{11}$, $R^{12}$, $R^{13}$, $R^{14}$, and $R^{15}$ each independently comprises hydrogen or a methyl group,
$L^1$, $L^2$, and $L^3$ each independently comprises a substituted or unsubstituted $C_1$ to $C_{10}$ alkylene group, a substituted or unsubstituted $C_3$ to $C_{20}$ cycloalkylene group, a substituted or unsubstituted $C_6$ to $C_{20}$ arylene group, or a substituted or unsubstituted $C_3$ to $C_{20}$ heterocyclic group,
a, b and c are each independently an integer in a range from 0 to 2, and
M comprises an alkali metal,
wherein "substituted" means that hydrogen in a compound is substituted with a substituent selected from the group consisting of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (herein, R and R' are each independently hydrogen or a C1 to C6 alkyl group), a sulfobetaine group ($-RR'N^+(CH_2)_nSO_3^-$, n is a natural number from 1 to 10), a carboxybetaine group ($-RR'N^+(CH_2)_nCOO^-$, n is a natural number from 1 to 10) (herein, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, herein, R denotes hydrogen, a C1 to C6 alkyl group, a C1 to C6 alkoxy group, or a C6 to C12 aryl group), a carboxyl group (-COOH) or a salt thereof (-C(=O)OM, herein, M denotes an organic or inorganic cation), a sulfonic acid group ($-SO_3H$) or a salt thereof ($-SO_3M$, herein, M denotes an organic or inorganic cation), and a phosphate group ($-PO_3H_2$) or a salt thereof ($-PO_3MH$ or $-PO_3M_2$, herein, M denotes an organic or inorganic cation).

**11.** The separator of any one of the preceding claims, wherein the (meth)acryl-based binder further comprises a third structural unit derived from (meth)acrylic acid or (meth)acrylate.

**12.** The separator of claim 11, wherein the third structural unit is represented by at least one of Chemical Formula 5, Chemical Formula 6, Chemical Formula 7, and a combination thereof:

Chemical Formula 5:

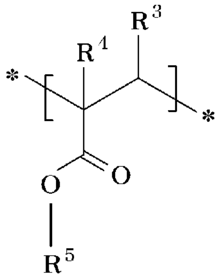

;

Chemical Formula 6:

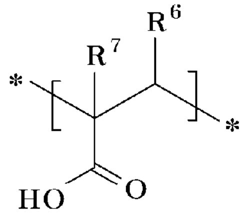

;

Chemical Formula 7:

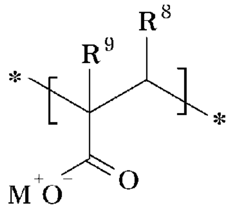

;

wherein in Chemical Formula 5 to Chemical Formula 7,

$R^3$, $R^4$, $R^6$, $R^7$, $R^8$, and $R^9$ each independently comprises hydrogen or a methyl group,
*$R^5$* comprises a substituted or unsubstituted $C_1$ to $C_{20}$ alkyl group, and
M comprises an alkali metal,
wherein "substituted" means that hydrogen in a compound is substituted with a substituent selected from the group consisting of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (herein, R and R' are each independently hydrogen or a C1 to C6 alkyl group), a sulfobetaine group ($-RR'N^+(CH_2)_nSO_3^-$, n is a natural number from 1 to 10), a carboxybetaine group ($-RR'N^+(CH_2)_nCOO^-$, n is a natural number from 1 to 10) (herein, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, herein, R denotes hydrogen, a C1 to C6 alkyl group, a C1 to C6 alkoxy group, or a C6 to C12 aryl group), a carboxyl group (-COOH) or a salt thereof (-C(=O)OM, herein, M denotes an organic or inorganic cation), a sulfonic acid group ($-SO_3H$) or a salt thereof ($-SO_3M$, herein, M denotes an organic or inorganic cation), and a phosphate group ($-PO_3H_2$) or a salt thereof ($-PO_3MH$ or $-PO_3M_2$, herein, M denotes an organic or inorganic cation).

**13.** The separator of any one of the preceding claims, wherein the adhesive binder is included at a loading amount in a range of 0.01 $g/m^2$ to 0.5 $g/m^2$ on the surface of the coating layer.

**14.** The separator of any one of the preceding claims, wherein the adhesive binder comprises crosslinked polymethylmethacrylate particles having a particle size (D50) of 0.7 μm or less measured using a laser diffraction method.

**15.** A rechargeable lithium battery (100) comprising:

a positive electrode (10);
a negative electrode (20);
and a separator (30) as defined in claim 1 and being arranged between the positive electrode (10) and the negative electrode (20).

FIG. 1

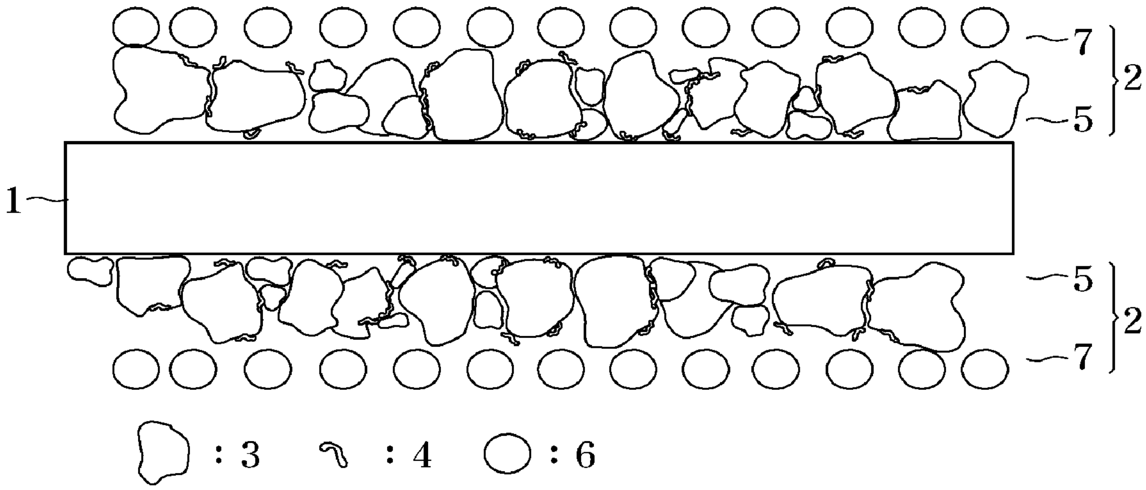


FIG. 2

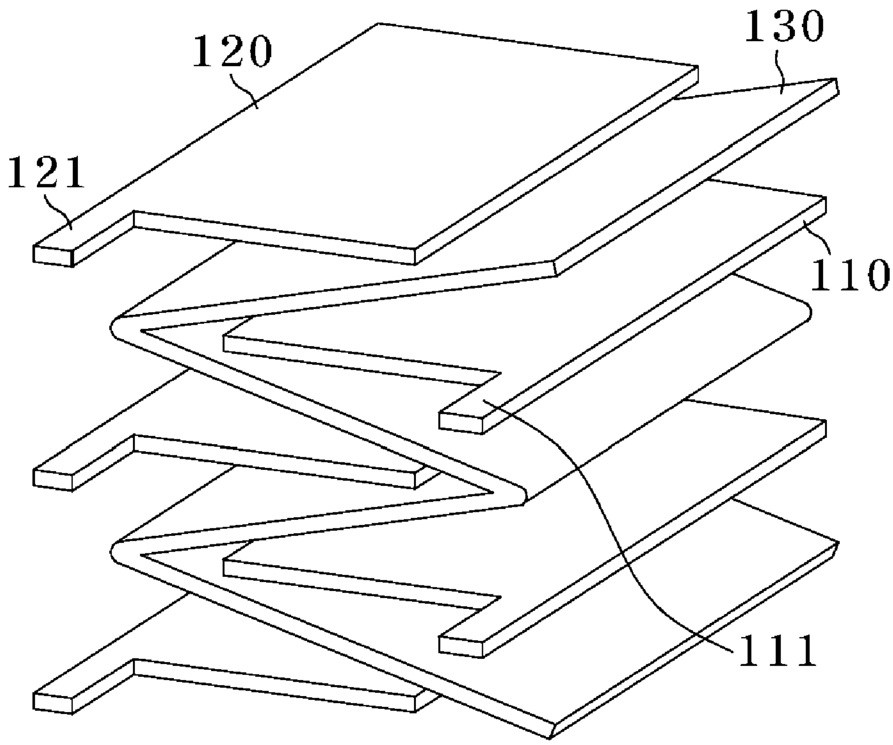

FIG. 3

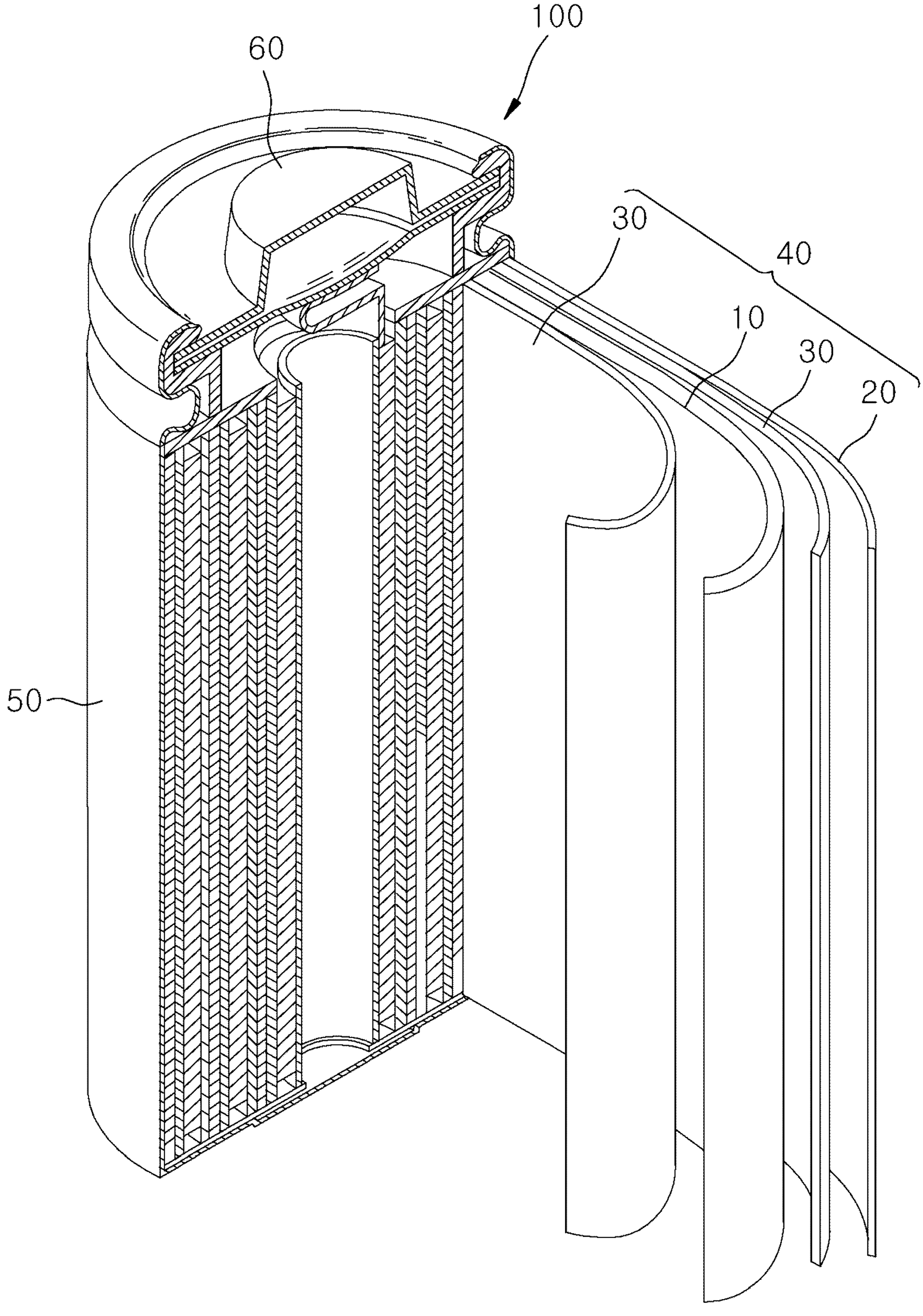

**FIG. 4**

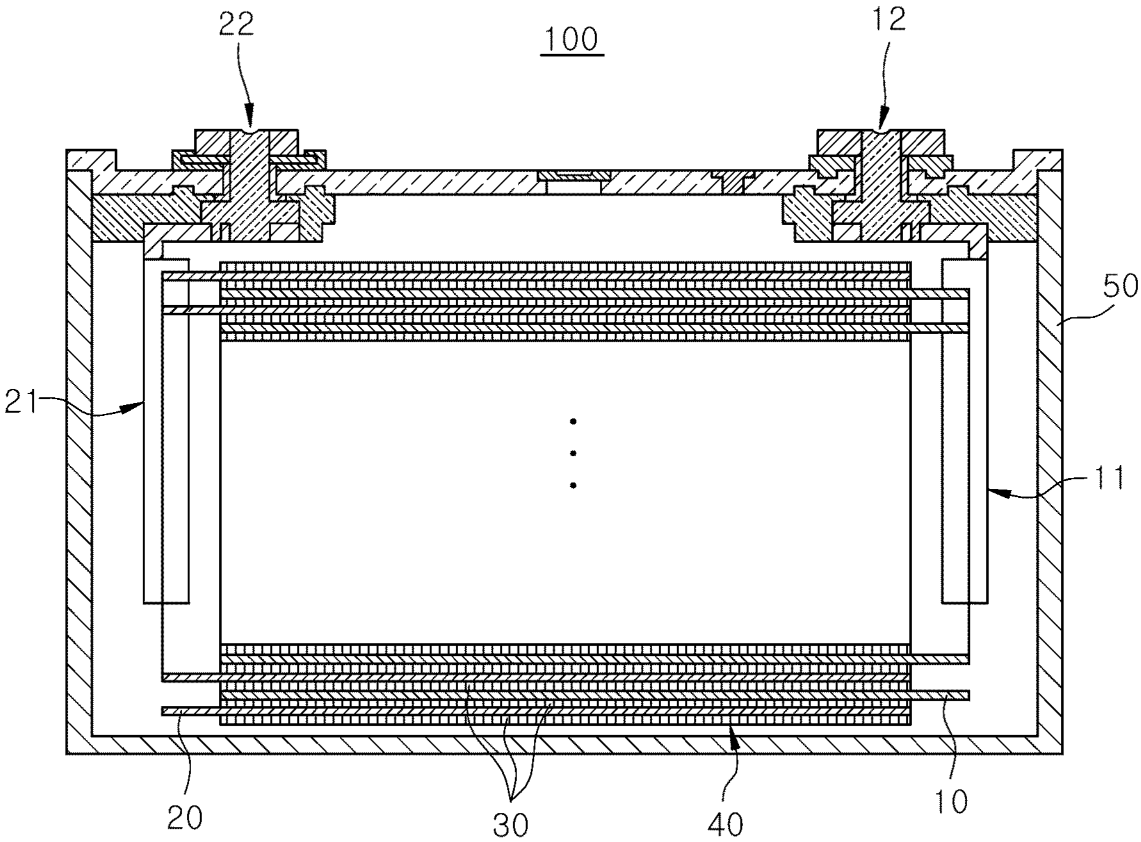

FIG. 5

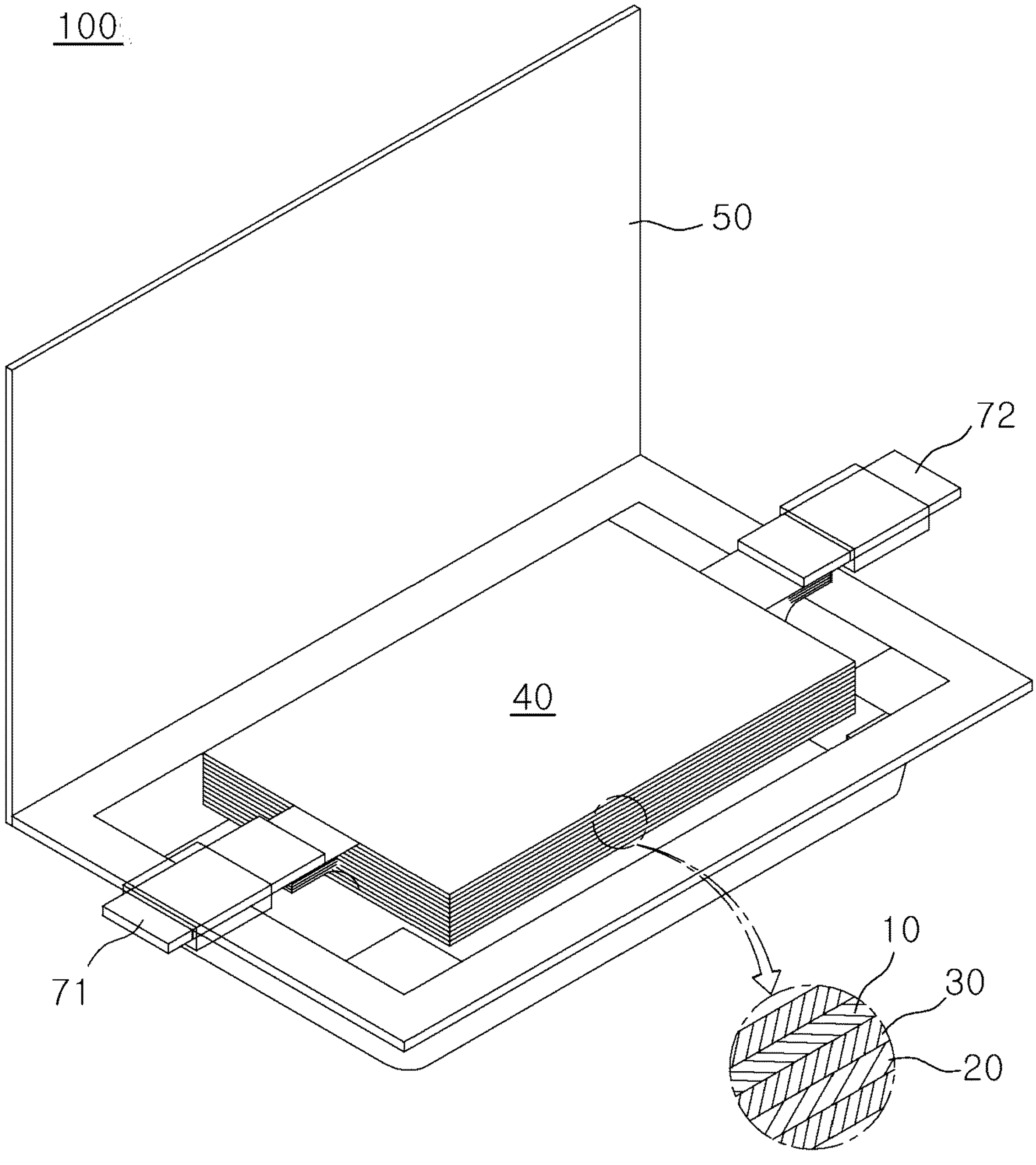

FIG. 6

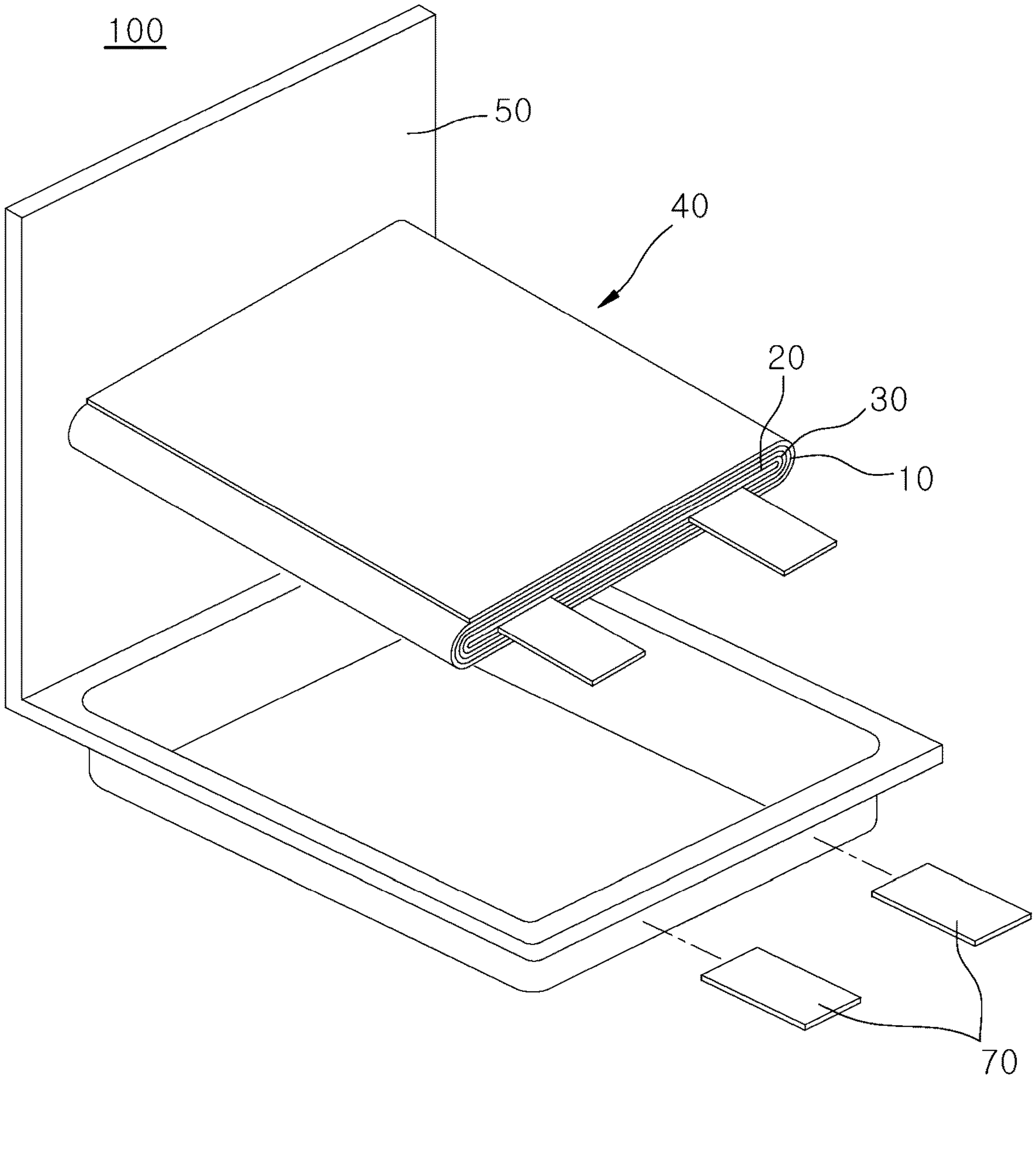

FIG. 7

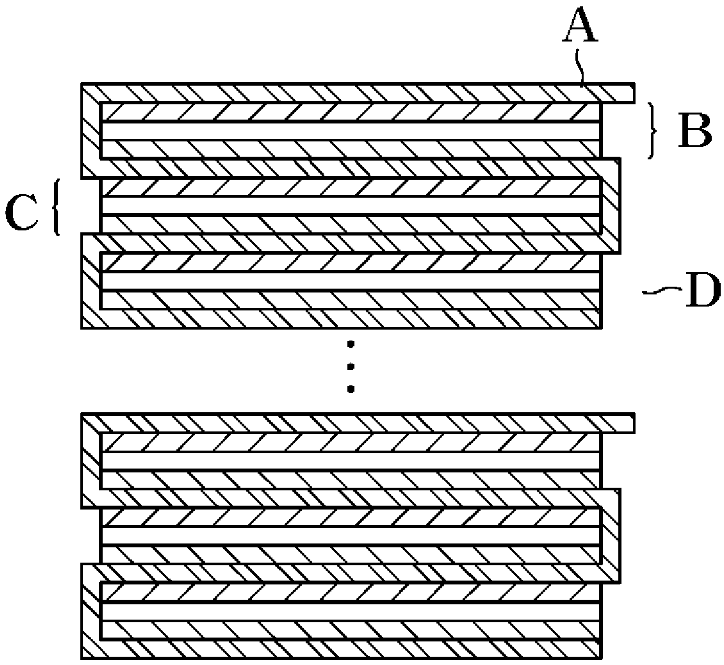


FIG. 8

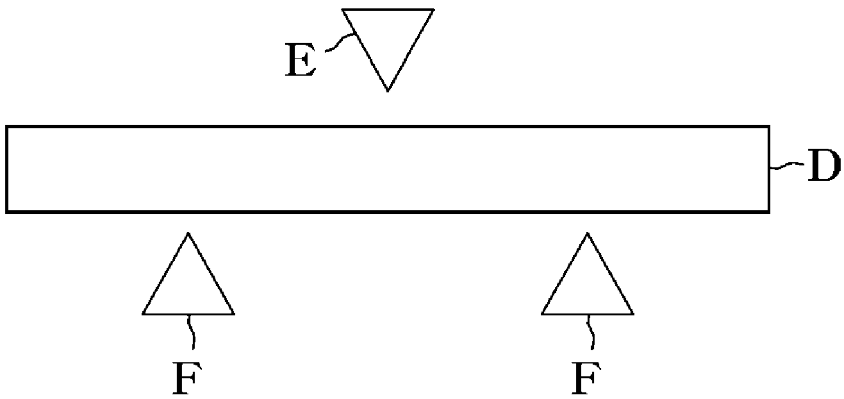

FIG. 9

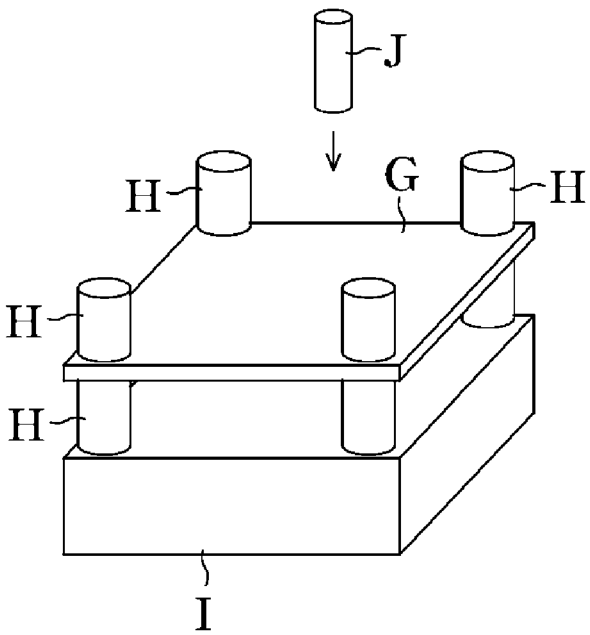

Europäisches Patentamt
European Patent Office
Office européen des brevets

# EUROPEAN SEARCH REPORT

Application Number
EP 25 20 1862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/102810 A1 (KIM YONGKYOUNG [KR] ET AL) 31 March 2022 (2022-03-31)<br>* the whole document * *<br>----- | 1-15 | INV.<br>H01M50/411<br>H01M50/449<br>H01M10/052 |
| A | EP 3 070 764 A1 (DAIKIN IND LTD [JP]) 21 September 2016 (2016-09-21)<br>* paragraphs [0115] - [0118], [0168] *<br>----- | 1-15 | |
| A | CN 107 895 766 A (CHINA AVIATION LITHIUM BATTERY LUOYANG CO LTD)<br>10 April 2018 (2018-04-10)<br>* example 1 *<br>----- | 1-15 | |

TECHNICAL FIELDS SEARCHED (IPC)

H01M

The present search report has been drawn up for all claims

1

| Place of search | Date of completion of the search | Examiner |
|---|---|---|
| The Hague | 4 February 2026 | Standaert, Frans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 20 1862

This annex lists the patent family members relating to the patent documents cited in the above-mentioned European search report. The members are as contained in the European Patent Office EDP file on
The European Patent Office is in no way liable for these particulars which are merely given for the purpose of information.

04-02-2026

| Patent document cited in search report | Publication date | Patent family member(s) | Publication date |
|---|---|---|---|
| US 2022102810 A1 | 31-03-2022 | CN 113261153 A | 13-08-2021 |
| | | EP 3907781 A1 | 10-11-2021 |
| | | KR 20200085185 A | 14-07-2020 |
| | | US 2022102810 A1 | 31-03-2022 |
| | | WO 2020141684 A1 | 09-07-2020 |
| EP 3070764 A1 | 21-09-2016 | CN 105794019 A | 20-07-2016 |
| | | CN 113067103 A | 02-07-2021 |
| | | EP 3070764 A1 | 21-09-2016 |
| | | HU E042435 T2 | 29-07-2019 |
| | | JP 5757363 B1 | 29-07-2015 |
| | | JP 2016033913 A | 10-03-2016 |
| | | KR 20160071440 A | 21-06-2016 |
| | | PL 3070764 T3 | 31-07-2019 |
| | | WO 2015083790 A1 | 11-06-2015 |
| CN 107895766 A | 10-04-2018 | NONE | |

EPO FORM P0459

For more details about this annex : see Official Journal of the European Patent Office, No. 12/82